# EUROPEAN PATENT SPECIFICATION

(11) **EP 3 800 377 B1**
(45) Date of publication and mention of the grant of the patent: **06.12.2023**
(21) Application number: 20204224.8
(22) Date of filing: 28.05.2015
(51) Int. Cl.: F16H 57/04, F16D 23/06

(54) **ARRANGEMENT IN A GEARBOX**
ANORDNUNG IN EINEM GETRIEBE
AGENCEMENT DANS UNE BOÎTE DE VITESSES

(30) Priority: 03.06.2014 SE 1450670
(43) Date of publication of application: 07.04.2021
(62) Divisional of application: 15803195.5
(73) Proprietor: Scania CV AB, 151 87 Södertälje (SE)
(72) Inventor: HÄGGSTRÖM, Daniel, 152 59 Södertälje (SE); ARNELÖF, Per, 136 66 Vendelsö (SE)
(74) Representative: Scania CV AB

(56) References cited:
- EP-A2- 1 517 064
- US-A- 5 009 116
- US-A1- 2007 199 786

## Description

### BACKGROUND OF THE INVENTION AND PRIOR ART

The invention relates to a gearbox according to the preamble of claim 1.

Conventional gearboxes comprise a countershaft, a main shaft, several gear sets, each one of which comprises a cogwheel that is rotatably arranged on the countershaft and a cogwheel that is arranged on the main shaft. Synchronising devices are used to synchronise and lock the cogwheels on the main shaft in connection with engaging gears. During operation, gearbox oil is led through the areas where the cogwheels in the respective gear sets are engaged with each other. As a rule, the cogwheels are oblique. Oblique teeth create a well-defined oil flow in the gear mesh, so that the oil is led from one side of the cogwheels to the other side of the cogwheels.

Synchronising devices are as a rule attached on the main shaft in connection with the cogwheels on the main shaft. Each of the synchronising devices may comprise a coupling sleeve arranged in a shiftable manner, which is connected with a latch cone having a conically shaped friction surface, adapted to go into engagement with a corresponding conically, shaped friction surface of a clutch cone, which in turn is connected with the cogwheel. When a gear is to be engaged in the gearbox, the coupling sleeve is shifted in an axial direction, from an initial state to a synchronising state, in which the clutch cone's conical friction surface goes into engagement with the latch cone's conical friction surface. Thus, the clutch cone and the latch cone obtain a synchronous speed relatively soon. When the synchronous speed has been achieved, the coupling sleeve may be shifted further to a locked state, in which it goes into engagement with a lock element on the clutch cone, so that the cogwheel obtains a rotational locking on the main shaft. Since the clutch cone is constantly connected with the cogwheel in the main shaft, these components rotate as one unit on the main shaft. In order to save space in the gearbox, the clutch cone is as a rule arranged in direct contact with the lateral surface of the cogwheel.

In some cases, the synchronising devices' clutch cones have a larger diameter than the cogwheels on the main shaft. Such a clutch cone will thus block one side of the cogwheel's engagement with the cogwheel on the countershaft. A common version of gearboxes has a relatively small cogwheel on the main shaft, with synchronising devices comprising clutch cones with a larger diameter than the cogwheel on both sides. In such cases, both the flow of oil to the gear mesh and the flow of oil from the gear mesh is hampered. Accordingly, the lubrication and cooling of the cogwheels in the gear mesh may deteriorate and oil trapped in the gear mesh may lead to higher losses in the gearbox, with an increased fuel consumption as a consequence. Since it is difficult for the oil to leave the gear mesh, the risk that the oil may be pinched in the gear mesh also increases.

The document US5009116A discloses a multiple countershaft transmission comprising an input shaft, two countershafts and an output shaft. Gear members are rotatably supported on the countershafts and are selectively connectible therewith through hydraulically operated friction clutches.

The document EP1517064A2 discloses a power transmission with synchromesh mechanism which can effectively reduce a peak value of an operation load needed for moving the coupling sleeve to achieve a gear change. The mechanism comprises a transmission rotation shaft, a synchronizing hub coaxially disposed about the transmission rotation shaft through a spline connection, and a coupling sleeve coaxially disposed about the synchronizing hub through a spline connection.

### SUMMARY OF THE INVENTION

The objective of the present invention is to provide an arrangement ensuring a required lubrication and cooling of a gear mesh between the cogwheels of a gear set, which is arranged in a gearbox.

This objective is achieved with the gearbox of the type specified at the beginning, which is characterised by the features specified in the characterising portion of claim 1. The cogwheel in a gear set arranged on the first shaft is referred to herein as the primary cogwheel, and the cogwheel which is arranged on the second shaft is referred to herein as the secondary cogwheel. The first shaft may be a countershaft in the gearbox and the second shaft may be a main shaft in the gearbox. If the gearbox comprises a split gear, the second shaft may alternatively be an input shaft in the gearbox. The arrangement comprises a first component, which is arranged at a first side of the gear mesh, between the primary cogwheel and the secondary cogwheel. The first component is equipped with a recess, having an opening arranged in connection with the gear mesh in a radial plane in relation to said shafts. Accordingly, an oil flow may be created between the gear mesh and said recess. The fact that the opening is arranged in a radial plane in relation to the shafts in the gearbox facilitates such a flow, since the oil leaves the gear mesh in a mainly axial direction in relation to the shafts. Accordingly, an exchange of oil in the gear mesh is ensured, thereby guaranteeing that the teeth obtain a good lubrication and cooling. Thus, no losses arise in the gearbox caused by oil trapped in the gear mesh.

According to one embodiment of the present invention, the primary cogwheel and the secondary cogwheel are adapted with oblique teeth. With oblique teeth, a lower noise volume is obtained in the gearbox than with straight teeth. When the teeth engage with each other, a low pressure area is created in connection with one side of the gear mesh. Thus, oil is sucked into the gear mesh on this side and out on the opposite side of the gear mesh. Such an oil flow facilitates the lubrication and cooling of the gear mesh. The arrangement may however be arranged in gearboxes with straight teeth. Said first component and said recess are advantageously arranged on that side of the gear mesh, where the oil is led out. Thus, the oil is always able to leave the gear mesh. If the oil is not able to leave the gear mesh, the accumulated oil results in torque losses in the gear mesh and a risk of the oil being pinched. Oil, which is pinched and heated to a high local temperature, may undergo chemical transformations. Shear forces also arise, and may shear the viscosity index increasing additives in the oil. Since the risk of pinching the oil is substantially eliminated, the intervals between oil replacements in the gearbox may be extended.

According to one embodiment of the present invention, the recess in the first component is annular. A first component, which rotates when in contact with a cogwheel, advantageously has an annular recess arranged at the height of the cogwheel's teeth. Thus, all the teeth of the cogwheel are in contact with the recess. Accordingly, they obtain a required lubrication and cooling when they engage with the teeth of the second cogwheel in the gear set. The first component is advantageously arranged on the main shaft. However, it may, alternatively, be arranged on the countershaft.

According to one embodiment of the present invention, said first component is comprised in a unit, which is adapted to provide a rotational locking of the secondary cogwheel on the second shaft. When a gear is engaged in the gearbox, the secondary cogwheel provides a synchronous speed, following which it obtains a rotational locking on the main shaft. The synchronous speed may be obtained by braking or accelerating the countershaft. When the secondary cogwheel has obtained a synchronous speed and a rotational locking on the main shaft, a driving torque is transmitted, via the gear mesh, between the primary cogwheel and the secondary cogwheel of the relevant gear set. Very substantial stress arises in the gear mesh. It is therefore important that the cogwheels obtain a required lubrication and cooling of the gearbox oil in the gear mesh. The first component may consist of a clutch cone in said unit. A clutch cone is constantly connected with the secondary cogwheel, and accordingly rotates with the same speed as the secondary cogwheel. The clutch cone may thus advantageously be arranged in contact with a side surface of the secondary cogwheel. It is a relatively simple procedure to provide a clutch cone with an annular recess, which may be performed at a small cost. Said first component may be comprised in a unit, which is also adapted to synchronise the secondary cogwheel's rotational speed with the rotational speed of the second shaft, before the secondary cogwheel obtains a rotational locking on the second shaft. In most gearboxes, synchronising devices are used which initially synchronise the secondary cogwheel's rotational speed with the rotational speed of the main shaft, following which they provide a rotational locking of the secondary cogwheel on the main shaft. They advantageously also comprise clutch cones, arranged in contact with the respective secondary cogwheels on the main shaft.

According to one embodiment of the present invention, said recess has a radial extension, which is larger than the radial extension of the gear mesh. Thus, first components with one and the same type of recess may be arranged externally of gear meshes, which located at somewhat different radial distances from the second shaft's rotational axis. Accordingly, identical first components may be used in several places in the gearbox.

According to one embodiment of the present invention, the arrangement comprises a second component, which is arranged on a second side of the gear mesh between the primary cogwheel and the secondary cogwheel, and said second component comprises a second recess, which is arranged in connection with the second side of the gear mesh between the primary cogwheel and the secondary cogwheel. Accordingly, recesses are obtained on both sides of the gear mesh, ensuring a flow of oil to the gear mesh and a flow of oil from the gear mesh. This achieves an abundant exchange of oil in the gear mesh and a very good lubrication and cooling.

### BRIEF DESCRIPTION OF THE DRAWINGS

Below, as an example, a preferred embodiment of the invention is described with reference to the enclosed drawings, on which:
- Fig. 1: shows a gearbox, which is equipped with an arrangement according to the present invention,
- Fig. 2: shows the arrangement in Fig. 1 in more detail and
- Fig. 3: shows a clutch cone according to the invention in a separate state.

### DETAILED DESCRIPTION OF A PREFERRED EMBODIMENT OF THE INVENTION

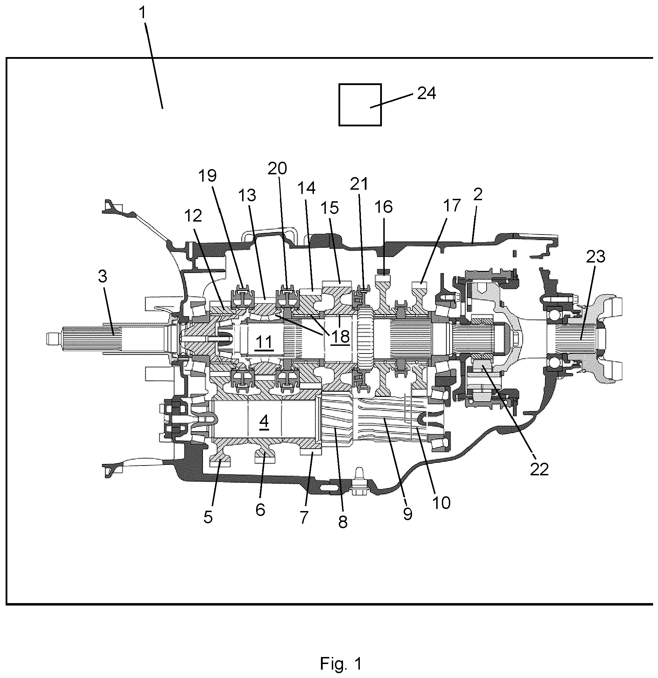

Fig. 1 shows a gearbox that may be arranged in a schematically drawn vehicle 1. The vehicle 1 may be a heavy goods vehicle. The gearbox is attached inside a housing 2, containing gearbox oil. The gearbox comprises an input shaft 3, which is operated by a non-displayed combustion engine. The gearbox comprises a countershaft 4, which is equipped with several cogwheels 5-10 of various dimensions. The cogwheels 5-10 are separate units, which are fixedly fitted on the countershaft 4 or constitute a homogeneous part of the countershaft 4. The gearbox comprises a main shaft 11, equipped with several cogwheels 12-17 of various dimensions. Each one of the gear sets comprises a primary cogwheel 5-10, which is fixedly arranged on the countershaft 4, and a secondary cogwheel 12-17, which is arranged in a rotatable manner on the main shaft 11 or the input shaft 3. The gearbox is equipped with a split gear, which in a first split state connects the input shaft 3 with the side countershaft 4 via a first gear set 5, 12. In a second split state, the input shaft 3 is connected with the countershaft 4 via a second gear set 6, 13. The countershaft 4 thus provides a rotation movement in both the split states of the input shaft 3. The second gear set 6, 13 provides a gearing that defines the third gear in the gearbox. The gearbox also comprises a third gear set 7, 14 that defines the second gear in the gearbox, a fourth gear set 8, 15 that defines the first gear in the gearbox, a fourth gear set 9, 16 that defines a crawling gear and a fifth gear set 10, 17 that defines a reverse gear. The gear set 10, 17 for the reverse gear comprises an interim cogwheel, which provides a reverse rotational direction of the main shaft 11.

The secondary cogwheels 12-17 are arranged in a rotatable manner on the main shaft 11 or on the input shaft 3 with the help of a bearing 18, which may be a needle bearing. Synchronising devices 19-21 are arranged in connection with the secondary cogwheels 12-15 on the main shaft 11. The task of each of the synchronising devices 19-21 is to achieve a synchronising, and a subsequent rotational locking of at least one of the secondary cogwheels 12-15 on the main shaft 11, in connection with engaging a gear.

A synchronising device 19 is comprised in the split gear, and sets the different split states in such a way that it connects the input shaft 3 with a countershaft 4 in the gearbox, via the first gear set 5, 12 in the first split state, and via the second gear set 6, 13 in the second split state. A synchronising device 20 is adapted to be responsible for synchronising and rotational locking of the secondary cogwheels 13, 14 for the second and third gears. A third synchronising device 21 is adapted to be responsible for synchronising and rotational locking of the secondary cogwheel 15 for the first gear. The gearbox also comprises a range gear 22, which is arranged between the main shaft 11 and an output shaft 23 in the gearbox. With the help of a range gear 22, all ordinary gears in the gearbox may be provided with a high and a low gearing, respectively. Accordingly, the gearbox may obtain twice as many gears. A control device 24 is adapted to control the activation of the synchronising devices 19-21 during shifting processes in the gearbox.

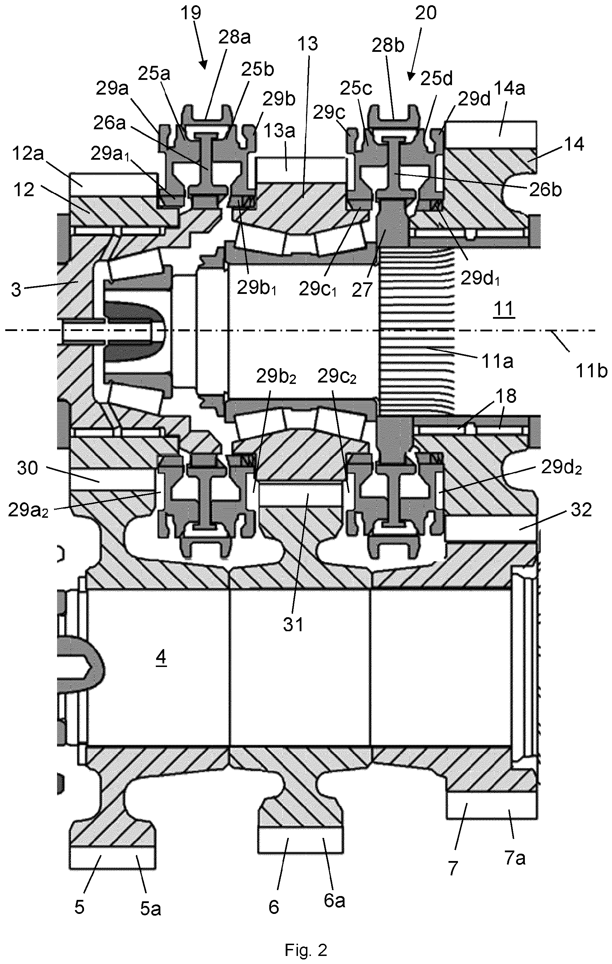

Fig. 2 shows the first synchronising device 19 and the second synchronising device 20 in more detail. The first synchronising device 19 comprises a first latch cone 25a and a second latch cone 25b, which are rotatably connected with the input shaft 3 of the gearbox, via a synchronising cleat 26a. The synchronising cleat 26a comprises teeth that are in constant engagement with teeth on the input shaft 3 of the gearbox. The latch cones 25a, 25b thus rotate with a speed related to the rotational speed of the gearbox's input shaft 3. The first synchronising device 19 also comprises a coupling sleeve 28a arranged in a shiftable manner, which is alternatively connectible with the latch cones 25a, 25b. The first latch cone 25a has a non-displayed conically shaped friction surface, which is adapted to engage with a corresponding, non-displayed, conically shaped friction surface of a first clutch cone 29a. The first clutch cone 29a is rotatably connected with an adjacent secondary cogwheel 12, via radially arranged internal teeth 29ai. The second latch cone 25b has a non-displayed conically shaped friction surface, which is adapted to engage with a corresponding, non-displayed, conically shaped friction surface of a second clutch cone 29b. The second clutch cone 29b is constantly connected with the secondary cogwheel 13, via radially arranged internal teeth 29bi.

The first synchronising device 19 is thus comprised in the split gear. When the coupling sleeve 28a is shifted in an axial direction to the left, in Fig. 2, from an initial state to a synchronising state, the conical friction surface of the first latch cone 25a engages with the conical friction surface of the first clutch cone 29a. Thus, the first latch cone 25a and the first clutch cone 29a obtain a synchronous speed relatively soon. When the synchronous speed has been obtained, the coupling sleeve 28a may be shifted further to a locked state, in which it provides a rotational locking between the synchronising cleat 26a and the first clutch cone 29a. Accordingly, the secondary cogwheel 12 also achieves a rotational locking on the input shaft 3. The split gear is now in the first split state. When the coupling sleeve 28a is shifted in an axial direction to the right, in Fig. 2, from an initial state to a synchronising state, the conical friction surface of the second latch cone 25b engages with the conical friction surface of a second clutch cone 29b. Thus, the second latch cone 25b and the second clutch cone 29b obtain a synchronous speed relatively soon. When the synchronous speed has been obtained, the coupling sleeve 28b may be shifted further to a locked state, in which it provides a rotational locking between the second latch cone 25b and the second clutch cone 29b. Accordingly, the secondary cogwheel 13 also achieves a rotational locking on the input shaft 3. The split gear is now in the second split state.

The second synchronising device 20 comprises a third latch cone 25c and a fourth latch cone 25d, which are connected with the input main shaft 11 of the gearbox via a lathe dog 27 and a synchronising cleat 26b. The lathe dog 27 comprises teeth, which are constantly engaged with teeth 11a on the main shaft 11. The latch cones 25c, 25d of the synchronising device 20 thus rotate with a speed related to the speed of the main shaft 11. The second synchronising device 20 comprises a second coupling sleeve 28b arranged in a shiftable manner, which is alternatively connectible with the latch cones 25c, 25d. The third latch cone 25c has a non-displayed conically shaped friction surface, which is adapted to engage with a corresponding, non-displayed, conically shaped friction surface of a third clutch cone 29c. The third clutch cone 29c is constantly connected with the secondary cogwheel 13, via radially arranged internal teeth 29ci. The fourth latch cone 25d has a non-displayed conically shaped friction surface, which is adapted to engage with a corresponding, non-displayed, conically shaped friction surface of a fourth clutch cone 29d. The fourth clutch cone 29d is constantly connected with the secondary cogwheel 14, via radially arranged internal teeth 29di.

When the second coupling sleeve 28b is shifted in an axial direction to the left in Fig. 2, from an initial state to a synchronising state, the conical friction surface of the third latch cone 25c engages with the conical friction surface of the third clutch cone 29c. Thus, the third latch cone 25c and the third clutch cone 29c obtain a synchronous speed relatively soon. When the synchronous speed has been obtained, the coupling sleeve 28b may be shifted further to a locked state, in which it provides a rotational locking of the third latch cone 25c and the third clutch cone 29c. Accordingly, the secondary cogwheel 13 is rotationally locked on the main shaft 11. The third gear is now engaged in the gearbox. When the coupling sleeve 28b is shifted in an axial direction to the right in Fig. 2, from an initial state to a synchronising state, the conical friction surface of the fourth latch cone 25d engages with the conical friction surface of the fourth clutch cone 29d. Thus, the fourth latch cone 25d and the fourth clutch cone 29d obtain a synchronous speed relatively soon. When the synchronous speed has been obtained, the coupling sleeve 28b may be shifted further to a locked state, in which it provides a rotational locking of the fourth latch cone 25d and the fourth clutch cone 29d. Accordingly, the secondary cogwheel 14 is rotationally locked on the main shaft 11. The second gear is now engaged in the gearbox.

The first gear set 5, 12 has a gear mesh 30, the second gear set 6, 13 has a gear mesh 31 and the third gear set 7, 14 has a gear mesh 32. The housing 2 of the gearbox is filled with gearbox oil up to a level where at least the primary cogwheels 5-10 are in contact with the oil. Thus, gearbox oil is transported up to the secondary cogwheels 12-17 by the primary cogwheels 5-10, via the gear meshes 30-32. Gearbox oil is also led to the cogwheels via suitably arranged oil channels. The primary cogwheels 5-10 and the secondary cogwheels 12-17 are equipped with oblique teeth. When the teeth in the respective gear sets engage with each other, a negative pressure arises in one side of the gear mesh 30-32. Oil is therefore sucked into the gear mesh 30-32 on this side and out from the gear mesh 30-32 on the opposite side.

Conventional clutch cones comprise flat side walls, which are in contact with the lateral surfaces of the cogwheels. In cases where a secondary cogwheel has s smaller diameter than an adjacent clutch cone, the flat wall surface blocks the oil flow at one side of the gear mesh. In cases where a secondary cogwheel is surrounded by conventional clutch cones with a larger diameter on both sides, the flat wall surfaces block the oil flow on both sides of the gear mesh. In cases where a clutch cone forms a wall surface on the side of the gear mesh where oil is sucked in, there is a risk that too small an amount of gearbox oil may be led into the gear mesh. The cooling and lubrication of the teeth in the gear mesh may therefore deteriorate. When a clutch cone forms a wall surface on the side of the gear mesh where oil is led out, there is a risk that the existing oil remains inside the gear mesh. Therefore torque losses arise in the gearbox, leading to a higher fuel consumption and an increased amount of emissions in the exhausts. There is also a risk that the remaining oil is subjected to very high pressures and a local heating in the gear mesh, so that it undergoes a chemical transformation.

The secondary cogwheel 12 of the first gear set has a smaller diameter than the first synchronising device 19 and the first clutch cone 29a, which is in contact with a side surface of the secondary cogwheel 12. The secondary cogwheel 13 of the second gear set has a smaller diameter than the first synchronising device 19 and the second clutch cone 29b, which is in contact with a first side surface of the secondary cogwheel 13. The secondary cogwheel 13 also has a smaller diameter than the second synchronising device 20 and the third clutch cone 29c, which is in contact with a second opposite side surface of the secondary cogwheel 13. The secondary cogwheel 14 of the third gear set, however, has a larger diameter than the second synchronising device 20 and the third clutch cone 29c. The secondary cogwheel 15 of the fourth gear set also has a larger diameter than the third synchronising device 21. Problems with oil flow may arise primarily in the gear mesh 31, where the surrounding clutch cones 29b, 29c have side surfaces on both sides of the gear mesh 31. Problems with oil flow may also arise in the gear mesh 30, since the clutch cone 29a has a side surface on one side of the gear mesh 30.

In order to solve the above mentioned problem, each one of the clutch cones 29a-29d is equipped with an annular recess 29a₂-29d₂. Each recess 29a₂-29d₂ has an opening, which is arranged in connection with the gear mesh 30-32, in a radial plane in relation to the main shaft's rotational axis 11b. The annular recesses 29a₂-29d₂ are arranged at substantially the same radial distance from the main shaft's rotational axis 11b as the teeth 12a, 13a of the secondary cogwheels 12, 13, and therefore the gear mesh 30, 31. In the displayed embodiment in Fig. 2, the recesses 29a₂-29d₂ have a somewhat larger radial extension than the gear mesh 30, 31. The synchronising devices 19, 20 with such annular recesses 29a₂-29d₂ may be applied externally of the gear meshes 30, 31, which are located at somewhat different distances from the rotational axis 11b of the main shaft. The presence of the annual recesses 29a₂-29d₂ facilitates the oil flow to and from the gear mesh 30, 31. The oil that leaves the gear mesh 30, 31 and accumulates in one of the annular recesses 29a-d may subsequently be led back to the teeth 12a, 13a of the secondary cogwheels 12, 13, when they are no longer engaged in a gear mesh 30, 31 with the teeth 5a, 6a of a primary cogwheel 5, 6.

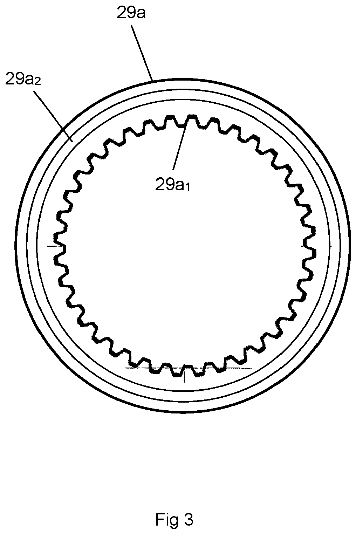

Fig. 3 shows the first clutch cone 29a in a separate state and that side of the clutch cone 29a, which is adapted to abut against the secondary cogwheel 12 of the first gear set. The clutch cone 29a is here equipped with an annular recess 29a₂. The clutch cone's teeth 29ai, via which it is connected with the secondary cogwheel 12, may also be seen.

The invention is not limited to the embodiment described above, but may be varied freely within the scope of the patent claims. Other components than clutch cones 29a-d may also be arranged in gearboxes in contact with cogwheels of gear sets, in such a manner that they block the gear mesh of the cogwheels. Such components, such as for example cogwheels for rotational speed measurement, may also be equipped with recesses in connection with the gear meshes. Such components may also be arranged on the countershaft in connection with a primary cogwheel of a gear set.

## Claims

1. A gearbox comprising an arrangement, wherein the gearbox comprises a first shaft (4), a second shaft (3, 11), at least one gear set, which comprises a primary cogwheel (5-7) arranged on the first shaft (4) and a secondary cogwheel (12-14) arranged on the second shaft (3, 11), wherein the primary cogwheel (5-7) and the secondary cogwheel (12-14) have teeth engaging (30-32) with each other, and wherein the arrangement comprises a first component (29a-d), which is arranged at a first side of the gear mesh (30-32) between the primary cogwheel (5-7) and the secondary cogwheel (12-14), said first component (29a-d) comprises a recess (29a₂-d₂) in a radial side wall in relation to said shafts (3, 4, 11), which recess has its opening arranged in connection with the gear mesh (30-32), so that gearbox oil may be led between the first side of the gear mesh (30-32) and the recess (29a₂-d₂), **characterised in that** the primary cogwheel (5-7) and the secondary cogwheel (12-14) are adapted with oblique teeth (5a-7a, 12a-14a), when the teeth engage with each other, a low pressure area is created in connection with one side of the gear mesh, thus oil is sucked into the gear mesh on this side and out on the opposite side of the gear mesh, and that said first component (29a-d) and said recess (29a₂-29d₂) are arranged on a side of the gear mesh (30-32), where gearbox oil is led out during operation.

2. A gearbox according to claim 1, **characterised in that** the recess (29a₂-d₂) of the first component (29a-d) is annular.

3. A gearbox according to any of the previous claims, **characterised in that** said first component (29a-d) is arranged on a main shaft (11) in the gearbox.

4. A gearbox according to any of the previous claims, **characterised in that** said first component (29a-d) is comprised in a unit (19, 20), which is adapted to provide a rotational locking of the secondary cogwheel (12-14) on the second shaft (3, 11).

5. A gearbox according to claim 4, **characterised in that** the first component is a clutch cone (29) of said unit (19, 20).

6. A gearbox according to any of claims 4 or 5, **characterised in that** said first component is comprised in a unit (19, 20), which is also adapted to synchronise the secondary cogwheel's (12-14) rotational speed with the second shaft's (3, 11) rotational speed, before the secondary cogwheel (12-14) is rotationally locked on the second shaft (3, 11).

7. A gearbox according to any of the previous claims, **characterised in that** said recess (29a₂-d₂) has a radial extension, which is larger than the radial extension of the gear mesh (30-32).

8. A gearbox according to any of the previous claims, **characterised in that** it comprises a second component (29a-d), which is arranged on an opposite side of the gear mesh (30-32) between the primary cogwheel (5-7) and the secondary cogwheel (12-14), and **in that** said second component (29) comprises a recess (29a₂-29d₂), which is arranged in connection with the second side of the gear mesh (30-32) between the primary cogwheel (5-7) and the secondary cogwheel (12-14), so that gearbox oil may be led between the second side of the gear mesh (30-32) and the recess (29a₂-d₂).

9. Vehicle comprising a gearbox according to any of claims 1-8.

## Patentansprüche

1. Getriebe mit einer Anordnung, wobei das Getriebe eine erste Welle (4), eine zweite Welle (3, 11) und mindestens einen Zahnradsatz umfasst, der ein auf der ersten Welle (4) angeordnetes Primärzahnrad (5-7) und ein auf der zweiten Welle (3, 11) angeordnetes Sekundärzahnrad (12-14) umfasst, wobei das Primärzahnrad (5-7) und das Sekundärzahnrad (12-14) ineinander greifende Zähne (30-32) aufweisen, und wobei die Anordnung ein erstes Bauteil (29a-d) umfasst, das an einer ersten Seite des Zahneingriffs (30-32) zwischen dem Primärzahnrad (5-7) und dem Sekundärzahnrad (12-14) angeordnet ist, wobei das erste Bauteil (29a-d) eine Vertiefung (29a₂-d₂) in einer radialen Seitenwand in Bezug auf die Wellen (3, 4, 11) aufweist, wobei die Vertiefung ihre Öffnung in Verbindung mit dem Zahneingriff (30-32) so angeordnet hat, dass Getriebeöl zwischen der ersten Seite des Zahneingriffs (30-32) und der Vertiefung (29a₂-d₂) geführt werden kann, **dadurch gekennzeichnet, dass** das Primärzahnrad (5-7) und das Sekundärzahnrad (12-14) mit schrägen Zähnen (5a-7a, 12a-14a) ausgebildet sind, sodass, wenn die Zähne ineinander eingreifen, ein Unterdruckbereich in Verbindung mit einer Seite des Zahneingriffs erzeugt wird, wodurch Öl auf dieser Seite in den Zahneingriff hineingesaugt und auf der gegenüberliegenden Seite des Zahneingriffs herausgesaugt wird, und dass das erste Bauteil (29a-d) und die Vertiefung (29a₂-29d₂) auf einer Seite des Zahneingriffs (30-32) angeordnet sind, auf der während des Betriebs Getriebeöl herausgeführt wird.

2. Getriebe nach Anspruch 1, **dadurch gekennzeichnet, dass** die Vertiefung (29a₂-d₂) des ersten Bauteils (29a-d) ringförmig ist.

3. Getriebe nach einem der vorhergehenden Ansprüche, **dadurch gekennzeichnet, dass** das erste Bauteil (29a-d) auf einer Hauptwelle (11) in dem Getriebe angeordnet ist.

4. Getriebe nach einem der vorhergehenden Ansprüche, **dadurch gekennzeichnet, dass** das erste Bauteil (29a-d) in einer Einheit (19, 20) enthalten ist, die dazu ausgeführt ist, eine Drehverriegelung des Sekundärzahnrads (12-14) auf der zweiten Welle (3, 1 1) zu bewirken.

5. Getriebe nach Anspruch 4, **dadurch gekennzeichnet, dass** das erste Bauteil ein Kupplungskonus (29) der Einheit (19, 20) ist.

6. Getriebe nach einem der Ansprüche 4 oder 5, **dadurch gekennzeichnet, dass** das erste Bauteil in einer Einheit (19, 20) enthalten ist, die auch dazu ausgeführt ist, die Drehzahl des Sekundärzahnrads (12-14) mit der Drehzahl der zweiten Welle (3, 11) zu synchronisieren, bevor das Sekundärzahnrad (a12-14) auf der zweiten Welle (3, 11) drehverriegelt wird.

7. Getriebe nach einem der vorhergehenden Ansprüche, **dadurch gekennzeichnet, dass** die Vertiefung (29a₂-d₂) eine radiale Erstreckung hat, die größer ist als die radiale Erstreckung des Zahneingriffs (30-32).

8. Getriebe nach einem der vorhergehenden Ansprüche, **dadurch gekennzeichnet, dass** es ein zweites Bauteil (29a-d) umfasst, das auf einer gegenüberliegenden Seite des Zahneingriffs (30-32) zwischen dem Primärzahnrad (5-7) und dem Sekundärzahnrad (12-14) angeordnet ist, und dass das zweite Bauteil (29) eine Vertiefung (29a₂-29d₂) aufweist, die in Verbindung mit der zweiten Seite des Zahneingriffs (30-32) zwischen dem Primärzahnrad (5-7) und dem Sekundärzahnrad (12-14) so angeordnet ist, dass Getriebeöl zwischen der zweiten Seite des Zahneingriffs (30-32) und der Vertiefung (29a₂-d₂) geführt werden kann.

9. Fahrzeug, das ein Getriebe nach einem der Ansprüche 1 bis 8 umfasst.

## Revendications

1. Boîte de vitesses comprenant un agencement, dans lequel la boîte de vitesses comprend un premier arbre (4), un deuxième arbre (3, 11), au moins un ensemble d'engrenages, qui comprend une roue dentée primaire (5-7) agencée sur le premier arbre (4) et une roue dentée secondaire (12-14) agencée sur le deuxième arbre (3, 11), dans laquelle la roue dentée primaire (5-7) et la roue dentée secondaire (12-14) ont des dents s'engrenant (30-32) les unes avec les autres, et dans laquelle l'agencement comprend un premier composant (29a-d), qui est agencé au niveau d'un premier côté de l'engrènement (30-32) entre la roue dentée primaire (5-7) et la roue dentée secondaire (12-14), ledit premier composant (29a-d) comprend un évidement (29a₂-d₂) dans une paroi latérale radiale par rapport auxdits arbres (3, 4, 11), lequel évidement a son ouverture agencée en connexion avec l'engrènement (30-32), de sorte que l'huile de boîte de vitesses peut être amenée entre le premier côté de l'engrènement (30-32) et l'évidement (29a₂-d₂), **caractérisée en ce que** la roue dentée primaire (5-7) et la roue dentée secondaire (12-14) sont adaptées à des dents obliques (5a-7a, 12a-14a), lorsque les dents s'engrènent les unes avec les autres, une zone basse pression est créée en relation avec un côté de l'engrenage, ainsi, de l'huile est aspirée dans l'engrènement de ce côté et sort du côté opposé de l'engrènement, et que ledit premier composant (29a-d) et ledit évidement (29a₂-29d₂) sont agencés sur un côté de l'engrènement (30-32), où l'huile de la boîte de vitesses est extraite pendant le fonctionnement.

2. Boîte de vitesses selon la revendication 1, **caractérisée en ce que** l'évidement (29a₂-d₂) du premier composant (29a-d) est annulaire.

3. Boîte de vitesses selon l'une quelconque des revendications précédentes, **caractérisée en ce que** ledit premier composant (29ad) est agencé sur un arbre principal (11) dans la boîte de vitesses.

4. Boîte de vitesses selon l'une quelconque des revendications précédentes, **caractérisée en ce que** ledit premier composant (29ad) est compris dans une unité (19, 20) qui est adaptée à la fourniture d'un blocage en rotation de la roue dentée secondaire (12-14) sur le deuxième arbre (3, 11).

5. Boîte de vitesses selon la revendication 4, **caractérisée en ce que** le premier composant est un cône d'embrayage (29) de ladite unité (19, 20).

6. Boîte de vitesses selon l'une quelconque des revendications 4 ou 5, **caractérisée en ce que** ledit premier composant est compris dans une unité (19, 20), qui est également adaptée à la synchronisation de la vitesse de rotation de la roue dentée secondaire (12-14) avec la vitesse de rotation du deuxième arbre (3, 11), avant que la roue dentée secondaire (12-14) soit bloquée en rotation sur le deuxième arbre (3, 11).

7. Boîte de vitesses selon l'une quelconque des revendications précédentes, **caractérisée en ce que** ledit évidement (29a2-d2) a une extension radiale, qui est plus grande que l'extension radiale de l'engrènement (30-32).

8. Boîte de vitesses selon l'une quelconque des revendications précédentes, **caractérisée en ce qu'**elle comprend un deuxième composant (29a-d), qui est agencé sur un côté opposé de l'engrènement (30-32) entre la roue dentée primaire (5-7) et la roue dentée secondaire (12-14), et **en ce que** ledit deuxième composant (29) comprend un évidement (29a₂-29d₂), qui est agencée en connexion avec le deuxième côté de l'engrènement (30-32) entre la roue dentée primaire (5-7) et la roue dentée secondaire (12-14), de sorte que l'huile de boîte de vitesses peut être amenée entre le deuxième côté de l'engrènement (30-32) et l'évidement (29a₂-d₂) .

9. Véhicule comprenant une boîte de vitesses selon l'une quelconque des revendications 1 à 8.
